# EUROPEAN PATENT SPECIFICATION

(11) **EP 4 733 161 B1**
(45) Date of publication and mention of the grant of the patent: **07.10.2026**
(21) Application number: 24208336.8
(22) Date of filing: 23.10.2024
(51) Int. Cl.: B60T 17/08, F16D 65/28

(54) **SPRING BRAKE ACTUATOR FOR A PNEUMATIC BRAKING SYSTEM OF A VEHICLE, IN PARTICULAR UTILITY VEHICLE, PNEUMATIC BRAKING SYSTEM, VEHICLE AND METHOD**
FEDERSPEICHERBREMSZYLINDER FÜR EIN PNEUMATISCHES BREMSSYSTEM EINES FAHRZEUGS, INSBESONDERE NUTZFAHRZEUG, PNEUMATISCHES BREMSSYSTEM, FAHRZEUG UND VERFAHREN
ACTIONNEUR DE FREIN À RESSORT POUR UN SYSTÈME DE FREINAGE PNEUMATIQUE D'UN VÉHICULE, EN PARTICULIER VÉHICULE UTILITAIRE, SYSTÈME DE FREINAGE PNEUMATIQUE, VÉHICULE ET PROCÉDÉ

(43) Date of publication of application: 29.04.2026
(73) Proprietor: ZF CV Systems Europe BV, 1170 Brüssel (BE)
(72) Inventor: STANCZYK, Karol, 55-080 Katy Wroclawskie (PL)
(74) Representative: Schäferjohann, Volker

(56) References cited:
- EP-A1- 4 279 349
- EP-B1- 2 787 222
- EP-B1- 4 005 884
- GB-A- 2 261 471
- JP-B2- 5 150 770
- US-A- 3 217 611
- US-A- 5 943 940

## Description

The disclosure relates to a spring brake actuator for a pneumatic braking system of a vehicle, in particular utility vehicle. The disclosure also relates to a pneumatic braking system of a vehicle, in particular utility vehicle, wherein the pneumatic braking system comprises a spring brake actuator, to a vehicle, in particular utility vehicle, and to a method for manufacturing a spring brake actuator.

Brake release mechanisms for spring brake actuators are generally known in the prior art. It is the aim of such release mechanisms to release a spring brake actuator, for example in case of pneumatic systems malfunctions. In known brake release mechanisms, the actuator is released by rotating a brake release bolt. Such brake release bolts comprise a threaded portion on which a running nut is engaged. The running nut is allowed to only move axially within a release bolt housing. Thus, rotating the release bolt leads to an axial movement of the running nut. The axial movement of the running nut is then utilized to move a spring brake actuator piston against a force of the actuator power spring to finally release the spring brake actuator and the wheel brake as such.

For operating said brake release bolt, it is known to attach an interface nut to the operating section of the brake release bolt. The interface nut of the spring brake actuator is used to transfer a torque to the release mechanism. Any movement of the interface nut relative to the brake release bolt should be avoided, since such movement may have a negative influence on the effectiveness of releasing the spring brake actuator. In current solutions, the position of the interface nut relative to the brake release bolt is locked by a pin. The pin is mounted in such way to lock any movement of the interface nut on the threaded brake release bolt. These interface nuts and operating sections each comprise a bore section that form a common bore when the interface nut is attached to the operating section in the correct position. After having aligned the interface nut to the operating section, a locking element in the form of a locking pin is thereafter inserted in said bore. Therewith, the interface nut is blocked regarding this position relative to the operating section. The pin could be mounted in radial or axial direction, depending on the final solution.

These systems are well-proven. However, there is still room for improvement. In an attempt to reduce the overall dimensions of the spring brake actuator, also the interface nut dimensions have been reduced. This, in consequence, also requires the use of smaller locking pins. These locking pins are however subject to high forces when operating the brake release bolt. It has been found that when reducing the dimensions of interface nut and the locking pin, in extreme situations, the locking pin may be destroyed during operation.

EP 4 279 349 A1 discloses a brake release mechanism for a spring brake actuator, in particular a parking or emergency spring brake actuator for use in a commercial vehicle, said release mechanism comprising a brake release bolt having a threaded portion and an operating section for operating the brake release bolt when inserted into a spring brake actuator, a running nut engaging the threaded portion, said running nut being adapted to axially travel along the threaded portion in order to move a spring brake actuator piston against a force of an actuator power spring, an interface nut attached to said operating section of the brake release bolt, wherein the interface nut and the operating section each comprise at least one bore section that form a common bore when the interface nut is attached to said operating section, and a locking element that is inserted in said bore for blocking the interface nut relative to the operating section. In particular, the locking element is configured as a locking ball. US 5943940 A shows a parking brake spring release indicator, where the warning piston is slotted for an O-ring seal.

However, each of the solution with the pin and with the ball requires a drilling process, e.g., in the nut, in the brake release bolt and/or on the interference line between the threaded brake release bolt and the interface nut and a proper alignment of the brake release bolt and the interface nut. The connection needs to have enough strength to transfer an expected torque which is needed to perform a full release of the spring brake actuator.

The drilling is complicated and time and cost-intensive, since the components, e.g., the brake release bolt and the nut are typically of a high hardness. For example, the brake release bolt may comprise a strength classification, also called metal strength and/or strength class, of 10.9, and the nut may comprise a strength classification of 8.8. The required strength of the connections implies requirements on the diameter that is to be drilled.

In the light of the prior art, it is an object of the disclosure to provide a contribution to the prior art. In particular, an object of the disclosure is to provide a brake release mechanism that is durable in particular with regard to the connection of the interface nut to the operating section and that is efficiently and cost-effectively to manufacture.

The object is solved by the subject-matter according to independent claim 1 and according to the remaining independent claims. Dependent claims relate to preferred embodiments.

According to an aspect of the present disclosure, a spring brake actuator for a pneumatic braking system of a vehicle, in particular utility vehicle, is provided, wherein the spring brake actuator comprises: a housing having a circumferential portion and a housing base with an opening; a brake release bolt, wherein the brake release bolt projects through the opening; and a boss element for cooperating with the brake release bolt; wherein the brake release comprises a first groove and the boss element comprises a second groove; the spring brake actuator comprises a retaining member; wherein the retaining member is arranged within the first groove and within the second groove.

The core idea of the disclosure is to provide a spring brake actuator with the brake release bolt but not requiring drilling and/or pin insertion. This is achieved by implementing a prevention of a motion of the boss element by an internal groove in the boss element, i.e., by the second groove, and by an external groove in brake release bolt, i.e., by the first groove, and by the retaining member. Therein, the retaining member is arranged in the first groove and in the second groove. Thus, the retaining member limits and/or prevents a relative motion between the brake release bolt and the boss element by a first interference fit and/or form-locking fit between the brake release bolt and the retaining member and by a second interference fit and/or form-locking fit between the retaining member and the boss element. I.e., fixing a motion of the boss element relative to the brake release bolt is performed and secured by the retaining member.

Thus, drilling of a hole in the boss element and/or the brake release bolt is not needed. Due to dispensing drilling, the manufacture of the spring brake actuator may be more effective with respect to time and cost. This may simplify the assembly process of the spring brake actuator by reducing the number of assembly steps for fixing the brake release bolt with the boss element and may eliminate time consuming processes for drilling on a production line.

The connection may achieve that a mechanical processing of the boss element and/or the brake release bolt, such as drilling a hole into the boss element and/or the brake release bolt, may be dispensed with. Further, an insertion of a ball and/or pin may be dispensed with. The connection may be implemented to different kinds of release mechanism which, for example, may comprise a threaded piece, such as the brake release bolt, and, e.g., a nut as the boss element, also called the interface nut.

Optionally, the brake release bolt and/or the boss element defines an axial direction; and each of the first groove and the second groove is circumferentially arranged with respect to the axial direction. This enables that the retaining member may also be circumferentially arranged with respect to the axial direction. I.e., the retaining member may at least partially and/or entirely circumferentially arranged radially outwardly from the brake release bolt in the first groove and radially inwardly from the boss element in the second groove.

Optionally, the brake release bolt comprises a thread; and the first groove is arranged to interrupt the thread. I.e., the thread is extended along the axial direction and the first groove is interrupting the thread and/or the thread is arranged in the axial direction on both sides of the first groove. This enables a reliable arrangement of the retaining member to fixate the brake release bolt and the nut by the retaining member.

Optionally, the boss element is a nut having an internal thread for cooperating with the thread of the brake release bolt; and the second groove is arranged to interrupt the internal thread. I.e., the internal thread is extended along the axial direction and the second groove is interrupting the internal thread and/or the internal thread is arranged in the axial direction on both sides of the second groove. This enables a reliable arrangement of the retaining member to fixate the brake release bolt and the nut by the retaining member.

Optionally, the boss element defines an axial direction; and the second groove is centrally arranged with respect to the axial direction. This enables that the boss element may be arranged with different orientations. This may simplify mounting the boss element.

Optionally, the retaining member is annularly-shaped, ring-shaped, disc-shaped, a spiral retaining ring and/or a washer. It is realized that the aforementioned types of retaining members may particularly effectively be used to be mounted in the first groove and in the second groove. Alternatively, for example a c-ring, in particular an internal c-ring may be used as the retaining member.

Optionally, the brake release bolt and/or the boss element defines a radial direction; and in the radial direction, the sum of the elongation of the first groove and of the second groove is larger than the elongation of the retaining member. This may enable an efficient mounting procedure. Therein, the retaining member may be arranged in the first groove, the retaining member may be compressed, the boss element and the brake release bolt are mounted to each other, wherein the first groove and the second groove may achieve an alignment, and the retaining member may be decompressed due to the compression and its elasticity and extends into the second groove.

Optionally, the brake release bolt and/or the boss element defines an axial direction; and the first groove is arranged, along the axial direction, in a distance from an end of the brake release bolt, wherein the distance is equal to half of an elongation, in the axial direction, of the boss element. This enables that the boss element may be arranged with different orientations. This may simplify mounting the boss element. Alternatively, the first groove may be arranged elsewhere, e.g., to modify characteristics of load transmission and/or mechanical strength of components with respect to exertions of forces.

Optionally, the brake release bolt and/or the boss element defines an axial direction; the brake release bolt comprises a thread with a thread pitch; and the retaining member comprises along the axial direction a thickness larger than the thread pitch. This may improve the mounting, since, by its thickness, the retaining member is prevented to lock, e.g., by projecting into the internal thread, the boss element during the mounting procedure.

According to an aspect of the disclosure, a pneumatic braking system of a vehicle, in particular utility vehicle, is provided, wherein the pneumatic braking system comprises the spring brake actuator according to the disclosure. Optionally, the spring brake actuator comprises one or more features as described herein as optional and/or preferred to achieve a technical effect corresponding thereto.

Therein, it is realized that the spring brake actuator may apply to spring brake actuators, in particular spring brake actuators as commonly used in commercial vehicles braking systems. In particular, the spring brake actuator may be implemented in pneumatic braking systems with a parking brake function that is actuated by the spring brake actuator.

According to an aspect of the disclosure, a vehicle, in particular utility vehicle, is provided. The vehicle, in particular utility vehicle, comprises the pneumatic braking system according to the disclosure and/or the spring brake actuator according to the disclosure. Optionally, the pneumatic braking system and/or the spring brake actuator comprises one or more features as described herein as optional and/or preferred to achieve a technical effect corresponding thereto.

Further advantages and technical features and their technical effects are disclosed in the figures and the description thereof.

The figures show preferred embodiments as follows:
Fig. 1 a schematic of a vehicle, in particular utility vehicle, according to an embodiment of the disclosure;
Fig. 2 a perspective view of a spring brake actuator according to an embodiment of the disclosure;
Fig. 3 a sectional view of a spring brake actuator;
Fig. 4 a detail of a sectional view of a spring brake actuator;
Fig. 5 a sectional view of a spring brake actuator according to an embodiment of the disclosure; and
Fig. 6 a detail of a sectional view of a spring brake actuator according to an embodiment of the disclosure.

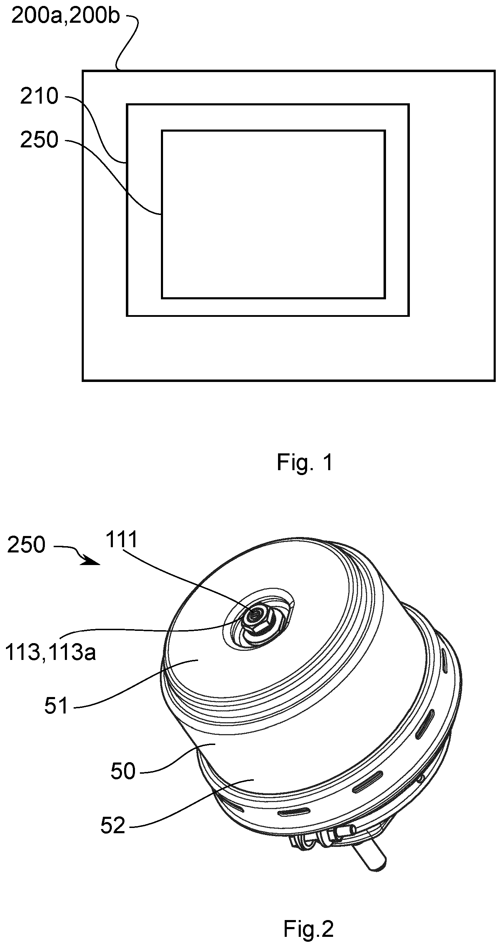

Figure 1 shows a schematic of a vehicle 200a, in particular utility vehicle 200b, according to an embodiment of the invention. In the following, the vehicle 200a, in particular utility vehicle 200b, is referred to as vehicle 200a, 200b. The vehicle 200a, 200b is a land vehicle 200a, 200b. For example, the vehicle 200a, 200b is a truck and/or towing vehicle of a vehicle combination.

The vehicle 200a, 200b comprises a pneumatic braking system 210. The pneumatic braking system 210 is adapted to be actuated by a driver of the vehicle 200a, 200b and/or by an autonomous driving function of the vehicle 200a, 200b to apply and/or release a braking torque.

The pneumatic braking system comprises a spring brake actuator 250. The spring brake actuator 250 is adapted to apply and release in particular a parking brake and/or an emergency brake, in particular in the event of a loss of air pressure and/or when actuated by the driver and/or by an autonomous driving function.

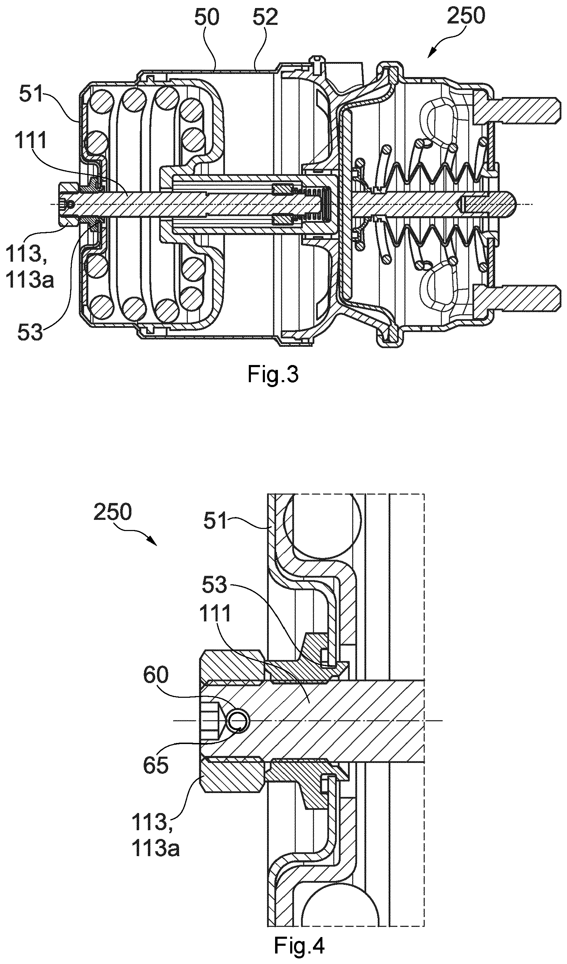

Such a spring brake actuator 250 is further described with reference to Figures 2, 5 and 6. Figures 3 and 4 illustrate a spring brake actuator 250 according to the prior art.

Figure 2 shows a perspective view of a spring brake actuator 250 according to an embodiment of the disclosure. The spring brake actuator 250 of Figure 2 is a spring brake actuator 250 for a pneumatic braking system 210 of a vehicle 200a, 200b.

Such a vehicle 200a, 200b and braking system 210 is described with reference to Figure 1. Figure 2 is described under reference to Figure 1.

The spring brake actuator 250 of Figure 2 comprises a housing 50. The housing 50 comprises a circumferential portion 52 and a housing base 51 with an opening 53 (see Figures 3 to 6). Thus, the housing 50 is essentially cylindrical. The housing 50 is made of sheet metal.

The spring brake actuator 250 comprises a boss element 113a. The boss element 113a is a nut 113. In another embodiment (not shown), the boss element 113a may be threadless. The nut 113 is adapted to cooperate with a brake release bolt 111 (see also Figures 3 to 6) of the spring brake actuator 250. Therein, a movement of the brake release bolt 111 reciprocates the nut 113. In another embodiment (not shown), the boss element 113a may cooperate with another shaft different from the brake release bolt 111 and/or at another section of the brake release bolt 111.

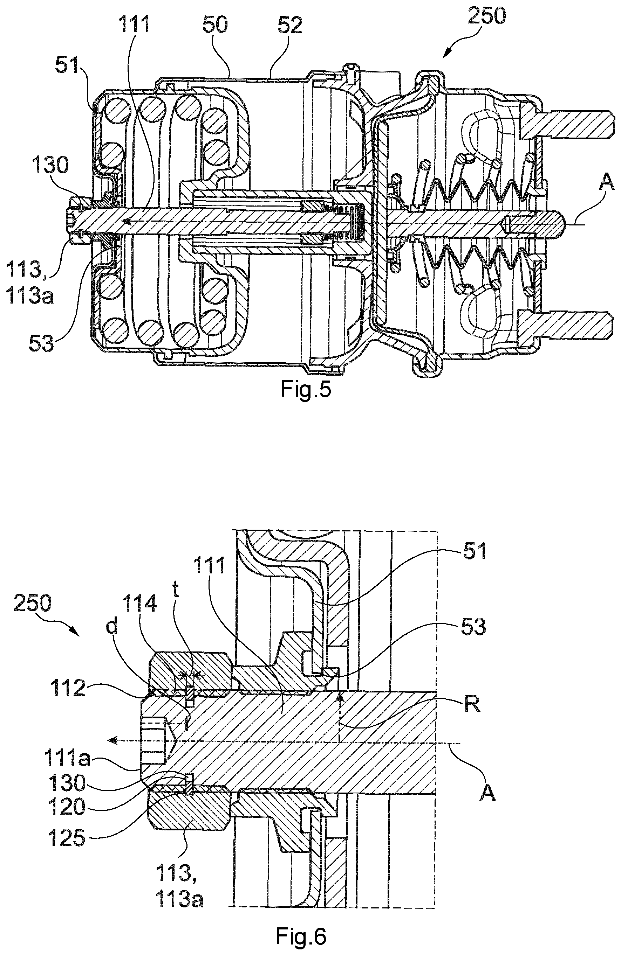

The spring brake actuator 250 is described further with reference to Figures 5 and 6 in further detail. In contrast, a spring brake actuator 250 according to the prior art is described in further detail with reference to Figures 3 and 4.

Figure 3 shows a sectional view of a spring brake actuator 250. Figure 3 is described under reference to Figure 2. Therein, the brake release bolt 111 projects through the opening 53. The brake release bolt 111 and the nut 113 are fixated to each other as further illustrated and described with reference to Figure 4.

Figure 4 shows a detail of a sectional view of a spring brake actuator 250. The spring brake actuator 250 of Figure 4 is the spring brake actuator 250 of Figure 3. Figure 4 is described under reference to Figure 3.

As shown in Figure 4, the spring brake actuator 250 comprises a pin 65. The nut 113 comprises a through hole 60 for mounting the pin 65. Further, the brake release bolt 111 comprises a blind hole (not indicated) for mounting the pin 65. I.e., the pin 65 is arranged and adapted to lock a relative motion between the nut 113 and the brake release bolt 111. Drilling is necessary to provide the through hole 60 in the nut 113 and the blind hole in the brake release bolt 111. The arrangement of the through hole 60 in the nut 113 and the blind hole in the brake release bolt 111 need to correspond to each other so that a reliable arrangement and fixation of the nut 113 is enabled.

Figure 5 shows a sectional view of a spring brake actuator 250 according to an embodiment of the disclosure. The spring brake actuator 250 is a spring brake actuator 250 for a pneumatic braking system 210 of a vehicle 200a, in particular utility vehicle 200b. Such a vehicle 200a, 200b, such a pneumatic braking system 210 and aspects of such a spring brake actuator 250 are described under reference to Figures 1 and 2. The spring brake actuator 250 of Figure 5 is the spring brake actuator 250 as shown in Figure 2. Figure 5 is described under reference to Figures 1 and 2.

The spring brake actuator 250 comprises the brake release bolt 111. The brake release bolt 111 is adapted to move along an axial direction A. The brake release bolt 111 is elongated in the axial direction A.

The brake release bolt 111 projects through the opening 53. I.e., a portion of the brake release bolt 111 may, depending on the deflection of the brake release bolt 111, protrude from the opening 53.

The spring brake actuator 250 comprises a nut 113 as a boss element 113a, i.e., a fastener with a threaded hole (see also Figure 6). The boss element 113a is adapted to cooperate with the brake release bolt 111.

The spring brake actuator 250 comprises a retaining member 130. The retaining member 130 is adapted and arranged to fixate, prevent and/or minimize a relative motion between the boss element 113a and the brake release bolt 111.

Further details of the spring brake actuator 250 are described and illustrated with reference to Figure 6.

Figure 6 shows a detail of a sectional view of a spring brake actuator 250 according to an embodiment of the disclosure. The spring brake actuator 250 of Figure 6 is the spring brake actuator 250 of Figures 2 and 5. Figure 6 is described under reference to Figures 1, 2 and 5.

The brake release bolt 111 comprises a thread 112. The thread 112 is arranged circumferentially around the brake release bolt 111. The thread 112 is arranged at the portion of the brake release bolt 111 which protrudes from the opening 53. In another embodiment (not shown), the thread 112 may be dispensed with, e.g., if a boss element 113a is threadless. The thread 112 comprises a pitch.

The nut 113 comprises an internal thread 114 for cooperating with the thread 112 of the brake release bolt 111. I.e., the internal thread 114 is arranged at an inner circumferential section of the nut 113. The internal thread 114 comprises a pitch, wherein the pitches of the thread 112 and the internal thread 114 match each other.

The brake release bolt 111 and the nut 113 are fixated to each other by a cooperation of the thread 112 and the internal thread 114. I.e., the nut 113 is screwed and/or wound on the brake release bolt 111 so that the thread 112 and the internal thread 114 enable keeping the brake release bolt 111 and the nut 113 together.

Each of the brake release bolt 111 and the boss element 113a defines an axial direction A. The axial direction A coincides with direction of a translational motion of the brake release bolt 111 during an actuation of the spring brake actuator 250. Each of the brake release bolt 111 and the boss element 113a defines a radial direction R. The radial direction R is perpendicular to the axial direction A.

The brake release bolt 111 comprises a first groove 120 and the boss element 113a comprises a second groove 125. Each of the first groove 120 and the second groove 125 is circumferentially arranged with respect to the axial direction A. I.e., the first groove 120 is circumferentially arranged at the brake release bolt 111 and the second groove 125 is circumferentially arranged at boss element 113a.

The retaining member 130 is arranged within the first groove 120 and within the second groove 125. I.e., the retaining member 130 is arranged to extend into the first groove 120 and into the second groove 125. In the radial direction R, the width of the retaining member 130 is larger than the depth of the second groove 125. This achieves that the retaining member 130 contacts the second groove 125 and projects into the first groove 120. In the radial direction R, the sum of the elongation of the first groove 120 and of the second groove 125 is larger than the elongation of the retaining member 130. Thus, the first groove 120 and the second groove 125 built a volume, wherein the volume comprises the retaining member 130 and a void space. The void space may enhance the mountability of the retaining member 130.

The retaining member 130 is annularly-shaped, ring-shaped, disc-shaped, a spiral retaining ring and/or a washer. Thus, the retaining member 130 is essentially circumferentially arranged radially outwardly from the first groove 120 and radially inwardly from the second groove 125. The retaining member 130 may be closed along the circumference, e.g., as a annularly-shaped, ring-shaped and/or disc-shaped retaining member 130 and/or as a washer. The retaining member 130 may be open along the circumference, e.g., in case of the spiral retaining ring. The retaining member 130 is made of metal and thus comprises an elasticity.

The first groove 120 is arranged to interrupt the thread 112. I.e., along the axial direction A, the thread 112 is arranged on both sides of the first groove 120. The second groove 125 is arranged to interrupt the internal thread 114. I.e., along the axial direction A, the internal thread 114 is arranged on both sides of the second groove 125.

The second groove 125 is centrally arranged with respect to the axial direction A. I.e., the boss element 113a comprises an elongation along the axial direction A and the second groove 125 is arranged in a middle portion along the elongation of the boss element 113a along the axial direction A.

The brake release bolt 111 comprises an end 111a. The end 111a projects out of the housing 50. The end 11a projects into the axial direction A. The first groove 120 is arranged, along the axial direction A, in a distance d from the end 111a. The distance d is equal to half of an elongation, in the axial direction A, of the boss element 113a.

The retaining member 130 comprises, along the axial direction A, a thickness t larger than the thread pitch.

The spring brake actuator 250 with the brake release bolt 111 does not require drilling in the nut 113 and the brake release bolt 111. The insertion of a pin 65 (see Figures 3 and 4) is dispensed with. Instead, the retaining member 130 is assembled in the external first groove 120 in the brake release bolt 111. While installation the nut 113, the retaining member 130 is compressed. When the second groove 125 of the nut 113 is arranged at the same height, i.e., the same position along the axial direction A, as the first groove 120, the retaining member 130 decompresses and prevents further relative rotation and/or motion between the boss member 113a and the brake release bolt 111.

In another embodiment (not shown), the retaining member 130, the first groove 120 and/or the second groove 130 may be of different shape. Further, it is possible to provide a plurality of grooves for each of the boss element 113a and the brake release bolt 111, in particular with from each other differing shapes and/or thicknesses t.

### List of reference signs (part of the description)

- A: axial direction
- R: radial direction
- t: thickness

- 50: housing
- 51: housing base
- 52: circumferential portion
- 53: opening

- 60: through hole
- 65: pin

- 111: brake release bolt
- 111a: end
- 112: thread
- 113: nut
- 113a: boss element
- 114: internal thread

- 120: first groove
- 125: second groove

- 130: retaining member

- 200a: vehicle
- 200b: utility vehicle
- 210: pneumatic braking system
- 250: spring brake actuator

## Claims

1. Spring brake actuator (250) for a pneumatic braking system (210) of a vehicle (200a), in particular utility vehicle (200b), wherein the spring brake actuator (250) comprises:
- a housing (50) having a circumferential portion (52) and a housing base (51) with an opening (53);
- a brake release bolt (111), wherein the brake release bolt (111) projects through the opening (53); and
- a boss element (113a) for cooperating with the brake release bolt (111); **characterized in that**
- the brake release bolt (111) comprises a first groove (120) and the boss element (113a) comprises a second groove (125);
- the spring brake actuator (250) comprises a retaining member (130); wherein
- the retaining member (130) is arranged within the first groove (120) and within the second groove (125).

2. Spring brake actuator (250) as claimed in claim 1, wherein
- the brake release bolt (111) and/or the boss element (113a) defines an axial direction (A); and
- each of the first groove (120) and the second groove (125) is circumferentially arranged with respect to the axial direction (A).

3. Spring brake actuator (250) as claimed in claim 1 or 2, wherein
- the brake release bolt (111) comprises a thread (112); and
- the first groove (120) is arranged to interrupt the thread (112).

4. Spring brake actuator (250) as claimed in any one of the preceding claims, wherein
- the boss element (113a) is a nut (113) having an internal thread (114) for cooperating with the thread (112) of the brake release bolt (111); and
- the second groove (125) is arranged to interrupt the internal thread (114).

5. Spring brake actuator (250) as claimed in any one of the preceding claims, wherein
- the boss element (113a) defines an axial direction (A); and
- the second groove (125) is centrally arranged with respect to the axial direction (A).

6. Spring brake actuator (250) as claimed in any one of the preceding claims, wherein
- the retaining member (130) is annularly-shaped, ring-shaped, disc-shaped, a spiral retaining ring and/or a washer.

7. Spring brake actuator (250) as claimed in any one of the preceding claims, wherein
- the brake release bolt (111) and/or the boss element (113a) defines a radial direction (R); and
- in the radial direction (R), the sum of the elongation of the first groove (120) and of the second groove (125) is larger than the elongation of the retaining member (130).

8. Spring brake actuator (250) as claimed in any one of the preceding claims, wherein
- the brake release bolt (111) and/or the boss element (113a) defines an axial direction (A); and
- the first groove (120) is arranged, along the axial direction (A), in a distance (d) from an end (111a) of the brake release bolt (111), wherein the distance (d) is equal to half of an elongation, in the axial direction (A), of the boss element (113a).

9. Spring brake actuator (250) as claimed in any one of the preceding claims, wherein
- the brake release bolt (111) and/or the boss element (113a) defines an axial direction (A);
- the brake release bolt (111) comprises a thread (112) with a thread pitch; and
- the retaining member (130) comprises, along the axial direction (A), a thickness (t) larger than the thread pitch.

10. Pneumatic braking system (210) of a vehicle (200a), in particular utility vehicle (200b), wherein the pneumatic braking system (210) comprises the spring brake actuator (250) as claimed in any of the preceding claims.

11. Vehicle (200a), in particular utility vehicle (200b), wherein the vehicle (200a), in particular utility vehicle (200b), comprises the pneumatic braking system (210) as claimed in claim 10 and/or the spring brake actuator (250) as claimed in any of the claims 1 to 9.

## Patentansprüche

1. Federspeicherbremszylinder (250) für ein pneumatisches Bremssystem (210) eines Fahrzeugs (200a), insbesondere Nutzfahrzeugs (200b), wobei der Federspeicherbremszylinder (250) umfasst:
- ein Gehäuse (50), das einen umlaufenden Abschnitt (52) und einen Gehäuseboden (51) mit einer Öffnung (53) aufweist;
- einen Bremslösebolzen (111), wobei der Bremslösebolzen (111) durch die Öffnung (53) vorsteht; und
- ein Vorsprungelement (113a) zum Zusammenwirken mit dem Bremslösebolzen (111); **dadurch gekennzeichnet, dass**
- der Bremslösebolzen (111) eine erste Nut (120) umfasst und das Vorsprungelement (113a) eine zweite Nut (125) umfasst;
- der Federspeicherbremszylinder (250) ein Halteelement (130) umfasst; wobei
- das Halteelement (130) innerhalb der ersten Nut (120) und innerhalb der zweiten Nut (125) angeordnet ist.

2. Federspeicherbremszylinder (250) nach Anspruch 1, wobei
- der Bremslösebolzen (111) und/oder das Vorsprungelement (113a) eine axiale Richtung (A) definiert; und
- jede der ersten Nut (120) und der zweiten Nut (125) in Bezug auf die axiale Richtung (A) umlaufend angeordnet ist.

3. Federspeicherbremszylinder (250) nach Anspruch 1 oder 2, wobei
- der Bremslösebolzen (111) ein Gewinde (112) aufweist; und
- die erste Nut (120) angeordnet ist, um das Gewinde (112) zu unterbrechen.

4. Federspeicherbremszylinder (250) nach einem der vorstehenden Ansprüche, wobei
- das Vorsprungelement (113a) eine Mutter (113) ist, die ein Innengewinde (114) zum Zusammenwirken mit dem Gewinde (112) des Bremslösebolzen (111) aufweist; und
- die zweite Nut (125) angeordnet ist, um das Innengewinde (114) zu unterbrechen.

5. Federspeicherbremszylinder (250) nach einem der vorstehenden Ansprüche, wobei
- das Vorsprungelement (113a) eine axiale Richtung (A) definiert; und
- die zweite Nut (125) in Bezug auf die axiale Richtung (A) mittig angeordnet ist.

6. Federspeicherbremszylinder (250) nach einem der vorstehenden Ansprüche, wobei
- das Halteelement (130) kranzförmig, ringförmig, scheibenförmig, ein Spiralhaltering und/oder eine Unterlegscheibe ist.

7. Federspeicherbremszylinder (250) nach einem der vorstehenden Ansprüche, wobei
- der Bremslösebolzen (111) und/oder das Vorsprungelement (113a) eine radiale Richtung (R) definiert; und
- in der radialen Richtung (R) die Summe der Dehnung der ersten Nut (120) und der zweiten Nut (125) größer als die Dehnung des Halteelements (130) ist.

8. Federspeicherbremszylinder (250) nach einem der vorstehenden Ansprüche, wobei
- der Bremslösebolzen (111) und/oder das Vorsprungelement (113a) eine axiale Richtung (A) definiert; und
- die erste Nut (120) entlang der axialen Richtung (A) in einem Abstand (d) von einem Ende (111a) des Bremslösebolzens (111) angeordnet ist, wobei der Abstand (d) gleich der Hälfte einer Dehnung, in der axialen Richtung (A), des Vorsprungelements (113a) ist.

9. Federspeicherbremszylinder (250) nach einem der vorstehenden Ansprüche, wobei
- der Bremslösebolzen (111) und/oder das Vorsprungelement (113a) eine axiale Richtung (A) definiert;
- der Bremslösebolzen (111) ein Gewinde (112) mit einer Gewindesteigung umfasst; und
- das Halteelement (130) entlang der axialen Richtung (A) eine Dicke (t) umfasst, die größer als die Gewindesteigung ist.

10. Pneumatisches Bremssystem (210) eines Fahrzeugs (200a), insbesondere Nutzfahrzeugs (200b), wobei das pneumatische Bremssystem (210) den Federspeicherbremszylinder (250) nach einem der vorstehenden Ansprüche umfasst.

11. Fahrzeug (200a), insbesondere Nutzfahrzeug (200b), wobei das Fahrzeug (200a), insbesondere Nutzfahrzeug (200b), das pneumatische Bremssystem (210) nach Anspruch 10 und/oder den Federspeicherbremszylinder (250) nach einem der Ansprüche 1 bis 9 umfasst.

## Revendications

1. Actionneur de frein à ressort (250) pour un système de freinage pneumatique (210) d'un véhicule (200a), en particulier d'un véhicule utilitaire (200b), dans lequel l'actionneur de frein à ressort (250) comprend :
- un boîtier (50) ayant une partie circonférentielle (52) et une base de boîtier (51) avec une ouverture (53) ;
- un boulon de desserrage de frein (111), dans lequel le boulon de desserrage de frein (111) fait saillie à travers l'ouverture (53) ; et
- un élément de bossage (113a) pour coopérer avec le boulon de desserrage de frein (111) ; **caractérisé en ce que**
- le boulon de desserrage de frein (111) comprend une première rainure (120) et l'élément de bossage (113a) comprend une seconde rainure (125) ;
- l'actionneur de frein à ressort (250) comprend un élément de retenue (130) ; dans lequel
- l'élément de retenue (130) est agencé au sein de la première rainure (120) et au sein de la seconde rainure (125).

2. Actionneur de frein à ressort (250) selon la revendication 1, dans lequel
- le boulon de desserrage de frein (111) et/ou l'élément de bossage (113a) définit une direction axiale (A) ; et
- chacune de la première rainure (120) et de la seconde rainure (125) est agencée de manière circonférentielle par rapport à la direction axiale (A).

3. Actionneur de frein à ressort (250) selon la revendication 1 ou 2, dans lequel
- le boulon de desserrage de frein (111) comprend un filetage (112) ; et
- la première rainure (120) est agencée pour interrompre le filetage (112).

4. Actionneur de frein à ressort (250) selon l'une quelconque des revendications précédentes, dans lequel
- l'élément de bossage (113a) est un écrou (113) ayant un filetage interne (114) pour coopérer avec le filetage (112) du boulon de desserrage de frein (111) ; et
- la seconde rainure (125) est agencée pour interrompre le filetage interne (114).

5. Actionneur de frein à ressort (250) selon l'une quelconque des revendications précédentes, dans lequel
- l'élément de bossage (113a) définit une direction axiale (A) ; et
- la seconde rainure (125) est agencée de manière centrale par rapport à la direction axiale (A).

6. Actionneur de frein à ressort (250) selon l'une quelconque des revendications précédentes, dans lequel
- l'élément de retenue (130) est en forme annulaire, en forme d'anneau, en forme discoïde, un anneau de retenue en spirale et/ou une rondelle.

7. Actionneur de frein à ressort (250) selon l'une quelconque des revendications précédentes, dans lequel
- le boulon de desserrage de frein (111) et/ou l'élément de bossage (113a) définit une direction radiale (R) ; et
- dans la direction radiale (R), la somme de l'allongement de la première rainure (120) et de la seconde rainure (125) est supérieure à l'allongement de l'élément de retenue (130).

8. Actionneur de frein à ressort (250) selon l'une quelconque des revendications précédentes, dans lequel
- le boulon de desserrage de frein (111) et/ou l'élément de bossage (113a) définit une direction axiale (A) ; et
- la première rainure (120) est agencée, le long de la direction axiale (A), à une distance (d) d'une extrémité (111a) du boulon de desserrage de frein (111), dans lequel la distance (d) est égale à la moitié d'un allongement, dans la direction axiale (A), de l'élément de bossage (113a).

9. Actionneur de frein à ressort (250) selon l'une quelconque des revendications précédentes, dans lequel
- le boulon de desserrage de frein (111) et/ou l'élément de bossage (113a) définit une direction axiale (A) ;
- le boulon de desserrage de frein (111) comprend un filetage (112) avec un pas de filetage ; et
- l'élément de retenue (130) comprend, le long de la direction axiale (A), une épaisseur (t) supérieure au pas de filetage.

10. Système de freinage pneumatique (210) d'un véhicule (200a), en particulier véhicule utilitaire (200b), dans lequel le système de freinage pneumatique (210) comprend l'actionneur de frein à ressort (250) selon l'une quelconque des revendications précédentes.

11. Véhicule (200a), en particulier véhicule utilitaire (200b), dans lequel le véhicule (200a), en particulier véhicule utilitaire (200b), comprend le système de freinage pneumatique (210) selon la revendication 10 et/ou l'actionneur de frein à ressort (250) selon l'une quelconque des revendications 1 à 9.
